# EUROPÄISCHE PATENTSCHRIFT

(11) **EP 2 072 384 B1**
(45) Veröffentlichungstag und Bekanntmachung des Hinweises auf die Patenterteilung: **25.08.2010**
(21) Anmeldenummer: 07123808.3
(22) Anmeldetag: 20.12.2007
(51) Int. Cl.: B62D 53/12

(54) **Sattelkupplung mit Verbindungsanordnung**
Fifth wheel with connecting assembly
Sellette d'attelage dotée d'un agencement de raccordement

(43) Veröffentlichungstag der Anmeldung: 24.06.2009
(73) Patentinhaber: SAF-HOLLAND Verkehrstechnik GmbH, 78224 Singen-Hohentwiel (DE)
(72) Erfinder: Hurst, Frank, 77704 Oberkich (DE); Neumeister, Ralph, 78256 Steisslingen (DE); Lüders, Karsten, 21217 Seevetal (DE)
(74) Vertreter: Bauer, Clemens

(56) Entgegenhaltungen:
- WO-A-01/46001
- CA-A1- 2 434 623
- DE-C- 842 895
- DE-U1- 29 616 253

## Beschreibung

Die Erfindung bezieht sich auf eine Sattelkupplung zur Kupplung eines Sattelzugfahrzeuges mit einem Sattelauflieger mit Verbindungsanordnungen zur Verbindung von elektrischen und pneumatischen oder hydraulischen Leitungen gemäß dem Oberbegriff des Auspruchs 1.

Bei grösseren Kraftfahrzeugen wird der Sattelauflieger mit dem Zugfahrzeug mittels einer Sattelkupplung gekuppelt. Die Sattelkupplung umfasst im Wesentlichen eine Sattelplatte mit einer Schliessvorrichtung am Zugfahrzeug und einen so genannten Königszapfen am Sattelauflieger. Ausser dieser mechanischen Verbindung müssen weitere, wie z.B. elektrische, hydraulische und pneumatische Verbindungen zwischen dem Zugfahrzeug und dem Anhänger hergestellt werden. Üblicherweise werden, wegen der Beweglichkeit des Sattelzuges, diese Verbindungen über flexible Leitungen einzeln zusammengesteckt. Das ist für den Fahrer beim Kuppeln und Entkuppeln des Sattelzuges aufwändig und zeitraubend.

Aus der EP 1240067 B1 ist eine gattungsgemässe Sattelkupplung mit einer Verbindungsanordnung zur Verbindung von elektrischen und pneumatischen Leitungen bekannt. Der Königszapfen am Sattelauflieger ist mit einer axialen Bohrung ausgebildet, in die, von der Achse des Königszapfens aus gesehen, eine elektrische Verbindungsanordnung für Gleichspannung und konzentrisch dazu eine Verbindungsanordnung für elektronische Datenübermittlung vorgesehen ist. Radial weiter aussen liegend ist in einem Ringzylinderraum die Kupplung der Druckluftleitungen vorgesehen. Am Zugfahrzeug ist in einem Bereich, der beim Kupplungsvorgang unterhalb des Zapfens liegt, ein Versorgungsteil mit komplementären Verbindungsanordnungen ausgebildet. Diese Anordnung ist bei den Betriebsbedingungen, die in der Sattelkupplung herrschen, äusserst empfindlich für Schmutz und Beschädigungen, die zu Fehlfunktionen führen können.

Die DE 842 895 betrifft eine Kupplungsvorrichtung für Anhänger von Sattelschleppern mit einem in senkrechter Richtung axial verschiebbaren, am Sattelschlepper sitzenden Kupplungszapfen und einer mit diesem Zapfen zusammenarbeitenden, am Anhänger vorgesehenen Kupplungshülse.

Die CA 2 434 623 bezieht sich auf eine Sattelkupplung zur Kupplung eines Sattelzugfahrzeugs mit einem Sattelauflieger, wobei der Sattelauflieger einen Königszapfen und das Zugfahrzeug eine mit dem Königszapfen zusammenwirkende Kupplungsplatte aufweist.

Die DE 296 16 253U bezieht sich auf eine Sattelkupplung für die Kupplung einer Sattelzugmaschine mit einem Sattelzuganhänger, mit einer Kupplungsplatte, einem mit dieser in Eingriff bringbaren Zugsattelzapfen sowie Anschlüssen zur Verbindung von Versorgungsleitungen zwischen der Sattelzugmaschine und dem Sattelanhänger, und definiert den Oberbegriffs des Auspruchs 1.

Es ist Aufgabe der vorliegenden Erfindung, eine Sattelkupplung zur Kupplung eines Sattelzugfahrzeugs mit einem Sattelauflieger mit Verbindungsanordnungen zur Verbindung von elektrischen und pneumatischen Leitungen vorzusehen, mittels welcher eine sichere elektrische und pneumatische oder hydraulische Verbindung der in der Kupplungsplatte und dem Königszapfen vorgesehenen Elemente gewährleistet wird.

Diese Aufgabe wird durch eine Sattelkupplung zur Kupplung eines Sattelzugfahrzeugs mit einem Sattelauflieger gemäß Anspruch 1 gelöst. Bevorzugte Ausführungsformen ergeben sich aus den abhängigen Ansprüchen.

Erfindungsgemäß ist eine Sattelkupplung vorgesehen zur Kupplung eines Sattelzugfahrzeugs mit einem Sattelauflieger mit Verbindungsanordnungen zur Verbindung von elektrischen und pneumatischen Leitungen, umfassend einen Königszapfen, welcher an dem Sattelauflieger anordenbar ist und konzentrisch angeordnete erste Verbindungsanordnungen für elektrische und pneumatische oder hydraulische Leitungen aufweist, und eine Kupplungsplatte, welche an dem Zugfahrzeug anordenbar ist und an deren Unterseite zu den ersten Verbindungsanordnungen komplementär ausgebildete zweite Verbindungsanordnungen aufweist, wobei die zweiten Verbindungsanordnungen in einem im Wesentlichen zylindrischen Verbindungsgehäuse angeordnet sind, und wobei unter der Kupplungsplatte und benachbart zum Verbindungsgehäuse eine Hubmechanik zum Anheben des Verbindungsgehäuses angeordnet ist, **dadurch gekennzeichnet, dass** die Hubmechanik mittels elastischer Elemente beweglich an der Kupplungsplatte angeordnet ist. Vorteilhafterweise kann die Sattelkupplung möglichst einfach und sicher in jeder Fahrsituation gegen Schmutzeinwirkungen und Fehlfunktionen, insbesondere Kontaktunterbrüche, geschützt werden. Zweckmäßigerweise ist somit eine Sattelkupplung vorgesehen zur Kupplung eines Sattelzugfahrzeuges mit einem Sattelauflieger mit Verbindungsanordnungen zur Verbindung von elektrischen und pneumatischen oder hydraulischen Leitungen, wobei der Sattelauflieger einen Königszapfen mit konzentrisch angeordneten ersten Verbindungsanordnungen für elektrische und pneumatische oder hydraulische Leitungen aufweist, und wobei das Zugfahrzeug unterhalb der Kupplungsplatte dazu komplementär ausgebildete zweite Verbindungsanordnungen aufweist, wobei die zweite Verbindungsanordnungen in einem zylindrischen Verbindungsgehäuse angeordnet sind und wobei unter der Kupplungsplatte und benachbart zum Verbindungsgehäuse eine Hubmechanik zum Anheben des Verbindungsgehäuses angeordnet ist.

Bevorzugte Weiterbildungen der Erfindung ergeben sich aus den abhängigen Ansprüchen.

Es ist von Vorteil, dass für die Verbindungsanordnungen möglichst wenig Platz beansprucht wird. Dies wird dadurch erreicht, dass die Hubmechanik ringförmig um das Verbindungsgehäuse angeordnet ist.

Es ist auch von Vorteil, dass die Abdichtung des Verbindungsgehäuses unabhängig dessen Höhenlage gewährleistet ist. Dies wird dadurch erreicht, dass der Schmutzdeckel unter der Kupplungsplatte verschiebbar durch die Schliessbewegung des Schlossstückes oder durch die Einfahrbewegung des Königszapfens angeordnet ist.

Ein Ausführungsbeispiel der Erfindung wird anhand der Figuren beschrieben. Es zeigen:
Figur 1 eine Sicht auf eine erfindungsgemässe Sattelkupplung mit konzentrischen Verbindungsanordnungen,
Figur 2 einen Schnitt durch die Sattelkupplung von Fig. 1,
Figur 3 eine Sicht auf eine etfindungsgemässe Hubmechanik für die Verbindungsanordnungen in Ruhestellung und
Figur 4 eine Sicht auf die Hubmechanik in Betriebsstellung.

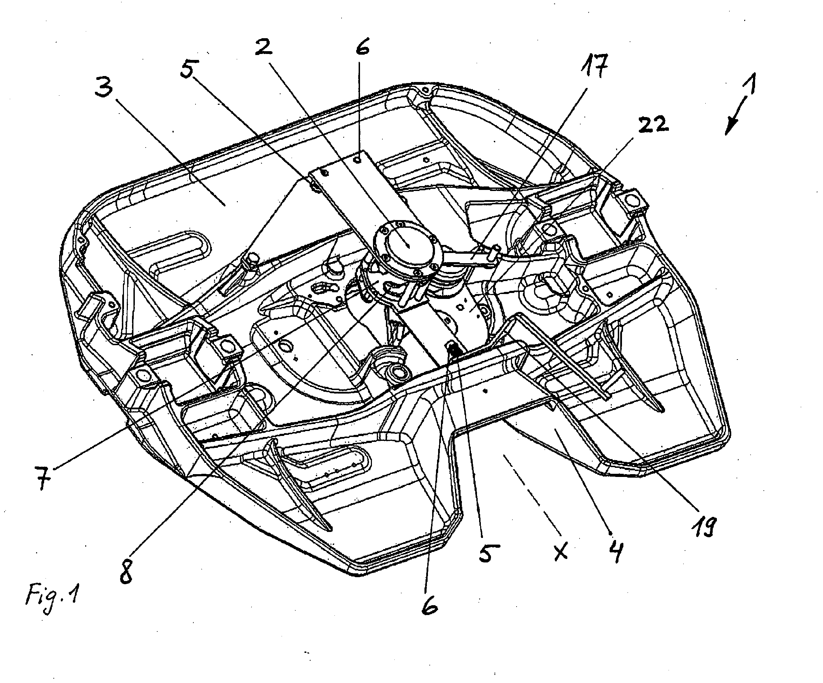

In Figur 1 ist eine Sattelkupplung 1 mit einer Hubmechanik 2 für ein Verbindungsgehäuse perspektivisch dargestellt. Figur 1 zeigt die Unterseite einer Kupplungsplatte 3. Im Verbindungsgehäuse sind mehrere Verbindungsanordnungen für elektrische und pneumatische oder hydraulische Leitungen untergebracht, die alle koaxial ausgebildet sind. Die Hubmechanik 2 ist an der Unterseite der Kupplungsplatte 3 elastisch angeordnet. Die dadurch mögliche Bewegung der Hubmechanik 2 in der X-Richtung, d.h. in der Fahrtrichtung und in der Richtung, in die der Sattelauflieger mit dem Königszapfen in den Einfahrbereich 4 der Kupplungsplatte 3 beim Kupplungsvorgang einfährt, wird realisiert durch die Befestigung mit einem elastischen Element 5, d.h. einer Kombination aus einer oder mehreren Federn mit einer Schraube 6, die eine Befestigungsplatte 19 der Hubmechanik 2 an der Unterseite der Kupplungsplatte 3 festlegt. Die elastisch federnde Lagerung der Hubmechanik 2 in der Z-Richtung, d.h. der Erstreckungsrichtung des Königszapfens 9, wird ebenso durch zwei elastische Elemente 5 realisiert.

Die elastische Lagerung der Hubmechanik 2 dient einerseits zum Ausgleich sowohl des Höhenspiels in der Z-Richtung als auch des Radialspiels in der X-Y-Ebene, so dass die Hubmechanik 2 auf jedem Fall zu dem jeweiligen Königszapfen ausgerichtet werden kann. Durch diese Ausrichtung oder Zentrierung der Hubmechanik 2 wird gewährleistet, dass die beiden komplementären Teile der Verbindungsanordnungen korrekt zueinander positioniert sind und gleichzeitig durch die elastische Vorspannung bei allen Fahrmanövern ihre relative Position zueinander nicht verändern können, womit eine sichere elektrische und pneumatische oder hydraulische Verbindung gewährleistet wird. In Figur 1 ist weiterhin einen Hebelarm 17 ersichtlich, der mit einer Hülse 7 verbunden ist, die eine Steuerkontur 8 aufweist.

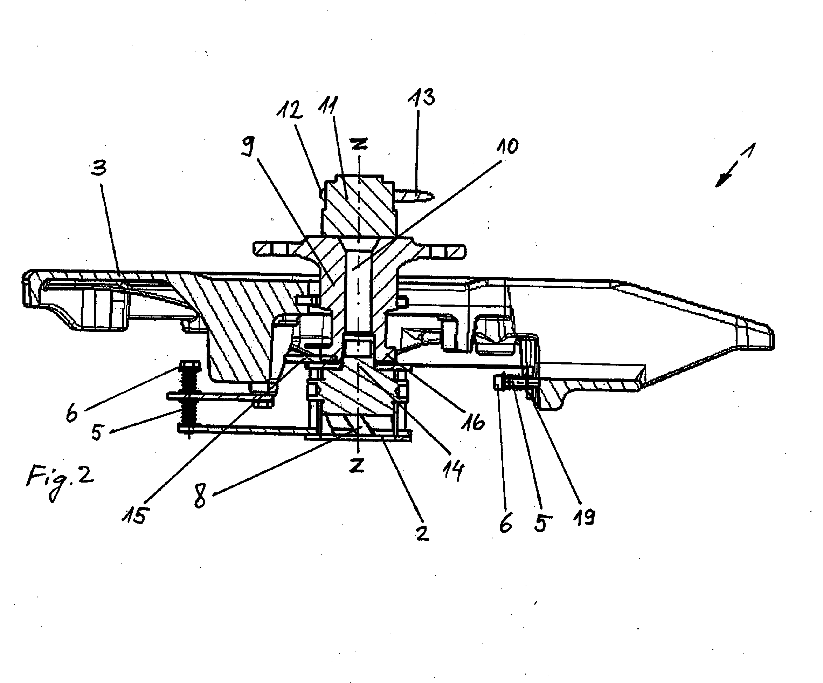

In Figur 2 ist die Sattelkupplung 1 von Figur 1 geschnitten dargestellt. In Figur 2 ist die Sattelkupplung 1 in der gekuppelten Stellung, d.h. in der Betriebsstellung während der Fahrt, dargestellt. Der Königszapfen 9, der mit dem hier nicht dargestellten Sattelauflieger verbunden ist, weist eine zentrale Bohrung 10 für elektrische und pneumatische Leitungen 12,13 auf. Oben auf dem Königszapfen 9 ist ein erstes Verbindungsgehäuse 11 mit einer pneumatischen oder hydraulischen Leitung 12 und einer elektrischen Leitung 13 ersichtlich. Unterhalb der Kupplungsplatte 3 ist die Hubmechanik 2 mit einem zweiten Verbindungsgehäuse 14 dargestellt.

Das Verbindungsgehäuse 14 ist im Wesentlichen ein zylindrisches Gehäuse mit koaxial angeordneten Steckverbindern für elektrische und/oder pneumatische Leitungen, die passend zu den pneumatischen oder hydraulischen Leitungen 12 und den elektrischen Leitungen 13 im Königszapfen 9 ausgebildet und angeordnet sind. Das Gehäuse 14 wird von einer Steuerkontur 8 in der Hülse 7 entlang der Z-Achse bewegt. Oberhalb der Hubmechanik 2, benachbart zu einem Kragen 16 am unteren Ende des Königszapfens 9 ist ein Schmutzdeckel 15 ersichtlich. In der Betriebsstellung, wenn der Königszapfen 9 in die Kupplungsplatte 3 eingekuppelt ist, ist der Schmutzdeckel 15 seitlich weg geschoben.

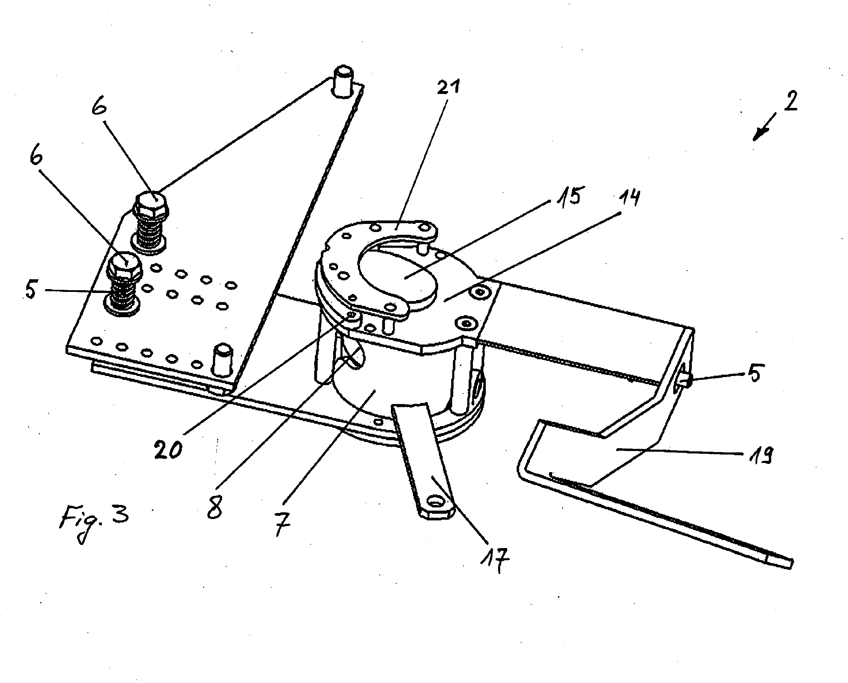

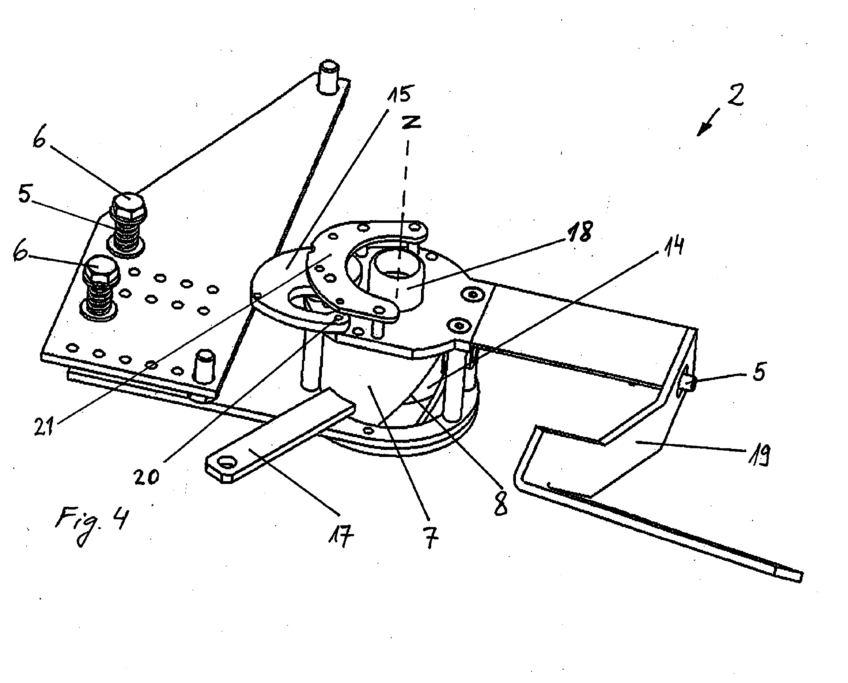

In den Figuren 3 und 4 ist die Hubmechanik 2 für sich alleine, ohne die darüber angeordnete Kupplungsplatte 3 der Sattelkupplung 1, dargestellt. Figur 3 zeigt die Hubmechanik 2 in Ruhestellung, mit dem Verbindungsgehäuse 14 in der unteren eingezogenen Stellung und der Schmutzdeckel 15 in der geschlossenen Stellung.

In Figur 4 ist dieselbe Hubmechanik 2 in der Betriebsstellung dargestellt. In Figur 4 ist ersichtlich, wie der Schmutzdeckel 15 seitlich weg geschoben dargestellt ist und wie der obere Bereich 18 des Verbindungsgehäuses 14 in der Z-Richtung nach oben ausgefahren ist. Der Schmutzdeckel 15 ist an einem Drehpunkt 20 radial beweglich mit der Hubmechanik 2 verbunden. Die Verschiebung des Schmutzdeckels 15 zum Freigeben der Öffnung zu den Verbindungsanordnungen im Verbindungsgehäuse 14 wird durch das in Figur 1 dargestellte Schlossstück 22, das unterhalb der Kupplungsplatte den Raum für den Königszapfen 9 freigibt, oder durch den Kragen 16 des einfahrenden Königszapfens 9 ausgelöst. Wenn der Königszapfen 9 aus der Kupplungsplatte 3 entfernt wird, wird der Schmutzdeckel 15 von einer Feder wieder über das Verbindungsgehäuse 14 geschoben.

Eine weitere mögliche günstige Ausgestaltungsform ist eine mechanische Haltevorrichtung 21, die eine mechanische Abstützung der Hubmechanik 2 auf der Oberseite des Kragens 16 des Königszapfens 9 erlaubt. Die Haltevorrichtung 21 kann zur alleinigen oder zusätzlichen Fixierung oder Zentrierung der Hubmechanik 2 bezüglich des Königszapfens 9 vorgesehen werden.

Die Hülse 7 mit dem Hebelarm 17 ist in den Figuren 3 und 4 jeweils in einer der Endstellungen dargestellt. Die erste Endstellung des Hebelarms 17 mit der Hülse 7 und der Steuerkontur 8 in Figur 3 bewirkt, dass die koaxialen Verbindungsanordnungen im Verbindungsgehäuse 14 in der Richtung der Z-Achse nach unten eingezogen werden. In Figur 4 ist die zweite Endstellung des Hebelarmes 17 und der Hülse 7 mit der Steuerkontur 8 dargestellt. Der Hebelarm 17 wird von einem hier nicht dargestellten Stellglied betätigt, das zwischen dem Ende des Hebelarmes 17 und der Befestigungsplatte 19 angeordnet ist.

Der Kupplungsvorgang besteht nacheinander aus folgenden Schritten: Einfahren des Königszapfens 9 in den Einfahrbereich 4, Verschieben des Schlossstückes 22 und des Schmutzdeckels 15, Verriegeln des Schlossstückes 22 und der Hubmechanik 2 und Hochfahren des Verbindungsgehäuses 14 zur Kupplung der elektrischen und pneumatischen oder hydraulischen Leitungen 12, 13 im Königszapfen 9.

Mit der hier vorgeschlagenen Hubmechanik 2 wird ein sicheres Kuppeln der Sattelkupplung 1 mit zentralen Verbindungsanordnungen für elektrische und pneumatische Leitungen 12,13 gewährleistet. Mit der elastisch gelagerten Hubmechanik 2 wird erreicht, dass eine Zentrierung und eine Vorspannung der Verbindungsanordnungen bezüglich des Königszapfens 9 gewährleistet werden kann. Mit dem verschiebbaren Schmutzdeckel 15 wird verhindert, dass Schmutz in die Verbindungsanordnungen im Verbindungsgehäuse 14 eindringen kann, wenn die Sattelkupplung 1 nicht gekuppelt ist.

## Patentansprüche

1. Sattelkupplung (1) zur Kupplung eines Sattelzugfahrzeugs mit einem Sattelauflieger mit Verbindungsanordnungen zur Verbindung von elektrischen
und pneumatischen Leitungen (12, 13), umfassend
einen Königszapfen (9), welcher an dem Sattelauflieger anordenbar ist und konzentrisch angeordnete erste Verbindungsanordnungen für elektrische und pneumatische oder hydraulische Leitungen (12, 13) aufweist, und
eine Kupplungsplatte (3), welche an dem Zugfahrzeug anordenbar ist und an deren Unterseite zu den ersten Verbindungsanordnungen komplementär ausgebildete zweite Verbindungsanordnungen aufweist,
wobei die zweiten Verbindungsanordnungen in einem im Wesentlichen zylindrischen Verbindungsgehäuse (14) angeordnet sind, und
wobei unter der Kupplungsplatte (3) und benachbart zum Verbindungsgehäuse (14) eine Hubmechanik (2) zum Anheben des Verbindungsgehäuses (14) angeordnet ist,
**dadurch gekennzeichnet, dass** die Hubmechanik (2) mittels elastischer Elemente (5, 6) beweglich an der Kupplungsplatte (3) angeordnet ist.

2. Sattelkupplung (1) zur Kupplung eines Sattelfahrzeuges mit einem Sattelauflieger nach dem Anspruch 1, **dadurch gekennzeichnet, dass** die Hubmechanik (2) ringförmig um das Verbindungsgehäuse (14) angeordnet ist.

3. Sattelkupplung (1) nach einem der Ansprüche 1 oder 2, **dadurch gekennzeichnet, dass** die Hubmechanik (2) einen Schmutzdeckel (15) aufweist.

4. Sattelkupplung (1) nach Anspruch 3, **dadurch gekennzeichnet, dass** der Schmutzdeckel (15) zwischen der Hubmechanik (2) und der Sattelkupplungsplatte (3) angeordnet ist.

5. Sattelkupplung (1) nach einem der Ansprüche 3 oder 4, **dadurch gekennzeichnet, dass** der Schmutzdeckel (15) unter der Kupplungsplatte (3) verschiebbar durch die Schliessbewegung des Schlossstückes (22) angeordnet ist.

6. Sattelkupplung (1) nach mindestens einem der Ansprüche 3 oder 4, **dadurch gekennzeichnet, dass** der Schmutzdeckel (15) unter der Sattelkupplungsplatte (3) verschiebbar durch die Einfahrbewegung des Königszapfens (9) angeordnet ist.

7. Sattelkupplung (1) nach einem der vorhergehenden Ansprüche, **dadurch gekennzeichnet, dass** die Hubmechanik (2) eine Steuerkontur (8) aufweist, wobei die Steuerkontur (8) die Hubbewegung des Verbindungsgehäuses (14) steuert.

8. Sattelkupplung (1) nach einem der vorhergehenden Ansprüche, **dadurch gekennzeichnet, dass** die Hubmechanik (2) eine mechanische Haltevorrichtung (21) zur Fixierung der Hubmechanik (2) bezüglich des Königszapfens (9) aufweist.

9. Sattelkupplung (1) nach einem der vorhergehenden Ansprüche, **dadurch gekennzeichnet, dass** die Hubmechanik (2) mit einer Vorrichtung zur Abstützung des Verbindungsgehäuses (14) an der Oberseite eines des Kragens (16) des Königszapfens (9) ausgebildet ist.

## Claims

1. Fifth wheel (1) for coupling a road tractor with a semi-trailer with connecting assemblies for connecting electric and pneumatic lines (12, 13), comprising a king pin (9) which is arrangeable at the semi-trailer and comprises concentrically arranged first connecting assemblies for electric and pneumatic or hydraulic lines (12, 13), and
a coupling plate (3) which is arrangeable at the road tractor and has at its underside second connecting assemblies designed to be complementary to the first connecting assemblies,
wherein the second connecting assemblies are arranged in a substantially cylindrical connecting housing (14), and
wherein under the coupling plate (3) and adjacent to the connecting housing (14) a lifting mechanism (2) for lifting the connecting housing (14) is arranged, **characterized in that** the lifting mechanism (2) is arranged at the coupling plate (3) in a movable manner by means of elastic elements (5, 6).

2. Fifth wheel (1) for coupling a road tractor with a semi-trailer according to claim 1, **characterized in that** the lifting mechanism (2) is arranged in a ring shape around the connecting housing (14).

3. Fifth wheel (1) according to any one of claims 1 or 2, **characterized in that** the lifting mechanism (2) has a dirt protection cover (15).

4. Fifth wheel (1) according to claim 3, **characterized in that** the dirt protection cover (15) is arranged between the lifting mechanism (2) and the fifth wheel plate (3).

5. Fifth wheel (1) according to any one of claims 3 or 4, **characterized in that** the dirt protection cover (15) is arranged below the coupling plate (3) in a manner slidable by means of the closing movement of the lock piece (22).

6. Fifth wheel (1) according to at least one of claims 3 or 4, **characterized in that** the dirt protection cover (15) is arranged below the fifth wheel plate (3) in a manner slidable by means of the retracting movement of the king pin (9).

7. Fifth wheel (1) according to any one of the preceding claims, **characterized in that** the lifting mechanism (2) has a controlling contour (8), wherein the controlling contour (8) controls the lifting movement of the connecting housing (14).

8. Fifth wheel (1) according to any one of the preceding claims, **characterized in that** the lifting mechanism (2) has a mechanical holding device (21) for fixing the lifting mechanism (2) with respect to the king pin (9).

9. Fifth wheel (1) according to any of the preceding claims, **characterized in that** the lifting mechanism (2) is designed with a device for supporting the connecting housing (14) on the top of a collar (16) of the king pin (9).

## Revendications

1. Attelage à sellette (1) pour l'attelage d'un véhicule tracteur avec une remorque à sellette comprenant des agencements de liaison pour la liaison de lignes électriques et de conduites pneumatiques (12, 13), comprenant un pivot central (9), qui peut être agencé sur la remorque à sellette et qui comprend des agencements de liaison agencés de manière concentrique pour des lignes électriques et des conduites pneumatiques ou hydrauliques (12, 13), et
une plaque d'accouplement (3), laquelle peut être agencée sur le véhicule tracteur et comporte à sa face inférieure des seconds agencements de liaison réalisés de façon complémentaire aux premiers agencements de liaison,
dans lequel les seconds agencements de liaison sont agencés dans un boîtier de liaison sensiblement cylindrique (14), et
un mécanisme de levage (2) est agencé sous la plaque d'accouplement (3) et au voisinage du boîtier de liaison (14) pour soulever le boîtier de liaison (14), **caractérisé en ce que** le mécanisme de levage (2) est agencé de façon mobile sur la plaque d'accouplement (3) au moyen d'éléments élastiques (5, 6).

2. Attelage à sellette (1) pour l'attelage d'un véhicule tracteur avec une remorque à sellette selon la revendication 1, **caractérisé en ce que** le mécanisme de levage (2) est agencé sous forme annulaire autour du boîtier de liaison (14).

3. Attelage à sellette (1) selon l'une des revendications 1 ou 2, **caractérisé en ce que** le mécanisme de levage (2) comprend un couvercle anti-salissures (15).

4. Attelage à sellette (1) selon la revendication 3, **caractérisé en ce que** le couvercle anti-salissures (15) est agencé entre le mécanisme de levage (2) et la plaque d'accouplement (3).

5. Attelage à sellette (1) selon l'une des revendications 3 ou 4, **caractérisé en ce que** le couvercle anti-salissures (15) est agencé au-dessous de la plaque d'accouplement (3) avec possibilité de déplacement par le mouvement de fermeture de la pièce de verrouillage (22).

6. Attelage à sellette (1) selon l'une au moins des revendications 3 ou 4, **caractérisé en ce que** le couvercle anti-salissures (15) est agencé au-dessous de la plaque d'accouplement (3) avec possibilité de déplacement par le mouvement d'introduction du pivot central (9).

7. Attelage à sellette (1) selon l'une des revendications précédentes, **caractérisé en ce que** le mécanisme de levage (2) comporte un contour de commande (8), de sorte que le contour de commande (8) commande le mouvement de levage du boîtier de liaison (14).

8. Attelage à sellette (1) selon l'une des revendications précédentes, **caractérisé en ce que** le mécanisme de levage (2) comprend un dispositif d'arrêt mécanique (21) pour la fixation du mécanisme de levage (2) par rapport au pivot central (9).

9. Attelage à sellette (1) selon l'une des revendications précédentes, **caractérisé en ce que** le mécanisme de levage (2) est réalisé avec un dispositif pour soutenir le boîtier de liaison (14) à la face supérieure de l'une des collerettes (16) du pivot central (9).
